# EUROPÄISCHE PATENTSCHRIFT

(11) **EP 0 452 558 B1**
(45) Veröffentlichungstag und Bekanntmachung des Hinweises auf die Patenterteilung: **26.01.1994**
(21) Anmeldenummer: 90124665.2
(22) Anmeldetag: 19.12.1990
(51) Int. Cl.: F24D 3/16, E04B 9/28

(54) **Flächenförmiges Austauschelement**
Planar exchange element
Elément échangeur planair

(30) Priorität: 14.04.1990 DE 4012134
(43) Veröffentlichungstag der Anmeldung: 23.10.1991
(73) Patentinhaber: H.KRANTZ - TKT Gesellschaft mit beschränkter Haftung, D-51465 Bergisch Gladbach (DE)
(72) Erfinder: Brunk, Marten, Dr., W-5060 Bergisch Gladbach 2 (DE); Leyer, Hans, W-5090 Leverkusen (DE); Basaran, Necmi, W-5060 Bergisch Gladbach 2 (DE)
(74) Vertreter: Müller, Jürgen, Dipl.-Ing.

(56) Entgegenhaltungen:
- EP-A- 0 112 272
- EP-A- 0 278 489
- CA-A- 1 061 774
- FR-A- 1 502 591
- FR-A- 1 506 580
- FR-A- 2 093 099

## Beschreibung

Die Erfindung betrifft ein System zum Klimatiesieren, insbesondere zum Kühlen von Räumen mit einem flächenförmigen Wärmeaustauschelement, mit den Merkmalen des Oberbegriffes des Anspruches 1.

Die Metallplatten mit den integrierten Strömungskanälen für derartige Wärmeaustauschelemente können dadurch hergestellt werden, daß zwei Aluminiumbleche durch Walzplattierung miteinander verbunden werden, wobei in dem Bereich der Strömungskanäle durch ein Trennmittel eine Verbindung der beiden Aluminiumbleche vermieden wird. Bei einem anderen bekannten Verfahren (AT-PS 361 666) werden zwei kunststoffbeschichtete Metallfolien mit ihren beschichteten Seiten in der Wärme aneinander gesiegelt, wobei nur der Strömungskanal freigelassen wird. Diese flächenförmigen Wärmeaustauschelemente werden als Fußbodenheizflächen direkt in den Estrich eingebettet.

Aus der EP-A-0 278 489 ist ein selbsttragendes Bauelement für Flächenheizungs- oder -kühlsyteme bekannt, die auf Fußböden oder an Wänden und Decken angebracht werden. Das Bauelement besteht aus einer Metallplatte, an die Hohlprofile zur Führung des Wärmeaustauschmediums angelötet sind. Die Metallplatte ist über eine Wärmedämmplatte mit einer aus Kunststoff bestehenden Unterplatte verbunden.

In der CA-A-1 061 774 ist ein Paneel zur Übertragung von Wärme beschrieben, das aus zwei Platten besteht, zwischen denen ein gewelltes Element angeordnet ist. Dieses Element bildet die Strömungskanäle zur Führung des Wärmeaustauschmediums.

Die EP-A-0 112 272 zeigt eine Wand-, Fußboden- oder Deckenplatte aus einem formstabilen Trägermaterial und einer Deckplatte. In das Trägermaterial sind auf der der Deckplatte zugewandten Seite Strömungskanäle eingeformt.

Der Erfindung Liegt die Aufgabe zugrunde, das gattungsgemäße Wärmeaustauschelement derart zu gestalten, daß der Aufbau einer größeren Kühl- oder Heizfläche aus einzelnen Wärmeaustauschelementen mit einfachen Mitteln möglich ist und daß eine sehr gleichmäßige Oberflächentemperatur über die gesamte Kühl- oder Heizfläche besteht, die an den Verbindungsstellen der einzelnen Wärmeaustauschelemente nicht wesentlich gestört wird.

Diese Aufgabe wird bei einem gattungsgemäßen System erfindungsgemäß durch die kennzeichnenden Merkmale des Anspruches 1 gelöst. Vorteilhafte Ausgestaltungen der Erfindung sind in den Unteransprüchen angegeben.

Das erfindungsgemäße System mit Wärmeaustauschelement kann extrem flach gestaltet werden. Die einzelnen Wärmeaustauschelemente lassen sich in Paneelbauweise zu großflächigen Kühl- oder Heizflächen zusammensetzen. Dabei ist ein enges Aneinanderstoßen der Wärmeaustauschelemente möglich, so daß deren Wärmeleitfähigkeit optimal ausgenutzt werden kann und eine sehr gleichmäßige Oberflächentemperatur über die gesamte Kühl- oder Heizfläche zu erzielen ist. Die selbsttragende Ausbildung der einzelnen Wärmeaustauschelemente wird durch den umlaufenden Rahmen erreicht. Dieser Rahmen kann so gestaltet sein, daß er in einer Nut-Feder- Verbindung zusammenwirkt, so daß gleichzeitig ein deckenbündiger Einbau möglich ist.

Ein Ausführungsbeispiel der Erfindung ist in der Zeichnung dargestellt und wird im folgenden näher erläutert. Es zeigen:
- Fig. 1: den Querschnitt durch ein Wärmeaustauschelement und
- Fig. 2: die Ansicht auf die Wärmeaustauschelemente in Blickrichtung A gemäß Fig. 1.

Das Wärmeaustauschelement eignet sich besonders für den Aufbau einer Decke, insbesondere einer Kühldecke, eines zu klimatisierenden Raumes für den Kühlfall. Die Wärmeaustauschelemente können auch als Heizflächen dienen. Ein Wärmeaustauschelement besteht im einzelnen aus einer Metallplatte 1 z. B. aus Aluminium, in die während des Herstellungsverfahrens Strömungskanäle 2 integriert sind. Die Strömungskanäle 2 sind von einem Wärmeaustauschmedium durchströmt. Als Wärmeaustauschmedium dient kaltes oder warmes Wasser, je nachdem ob die Wärmeaustauschelemente zur Kühlung oder zur Heizung des Raumes verwendet werden. Durch die Integration der Strömungskanäle 2 in die Metallplatte 1 erhalten diese eine sehr gute Wärmeleitfähigkeit.

Die Strömungskanäle 2 sind zur Zuführung und zur Abführung des Wärmeaustauschmediums mit zwei Stutzen 3 verbunden, die innerhalb der Wärmeaustauschelemente angeordnet sind.

Die Strömungskanäle 2 sind über die gesamte Fläche der Metallplatte 1 verteilt und liegen im wesentlichen parallel zueinander. Ausgehend von den Stutzen 3 verlaufen die Strömungskanäle 2 entweder mäanderförmig oder sie verzweigen sich in mehrere parallele Stränge. Die einzelnen Wärmeaustauschelemente sind an eine Sammelleitung angeschlossen, über die einzelne Räume, Raumgruppen oder Zonen mit dem Wärmeaustauschmedium versorgt werden.

Die Metallplatte 1 stellt für sich ein instabiles Gebilde dar. Sie wird daher mit einer Verstärkungskonstruktion versehen und bildet damit ein selbsttragendes Bauteil. Die Verstärkungskonstruktion kann aus einer Schicht aus Hartschaum bestehen, die auf eine Seite der Metallplatte 1 aufgebracht ist. Die Hartschaumschicht dient gleichzeitig der Isolierung.

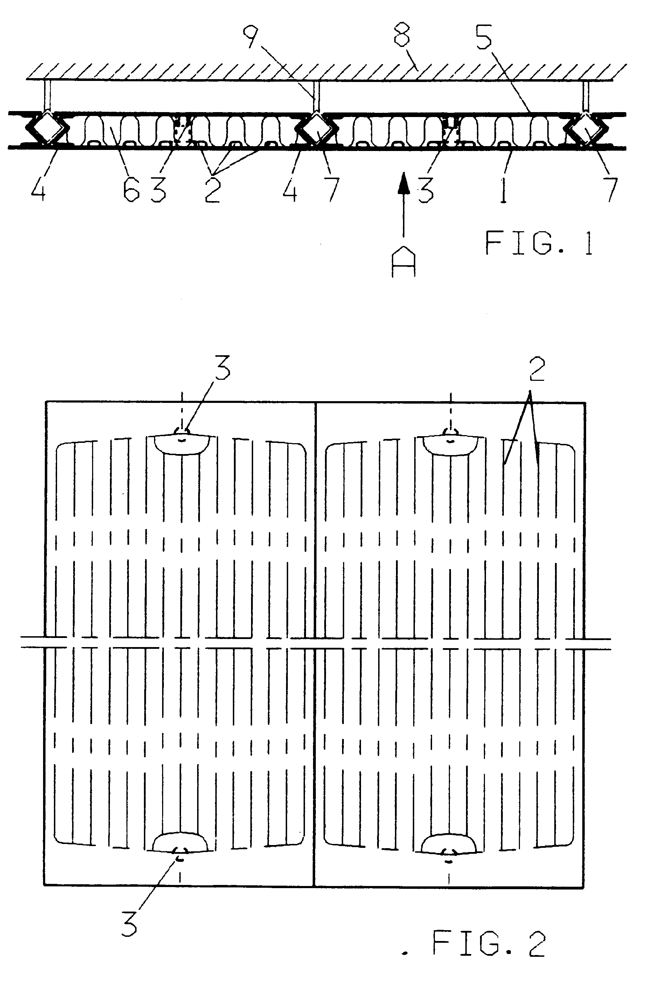

Gemäß Fig. 1 ist die die Strömungskanäle 2 enthaltende Metallplatte 1 mit einem umlaufenden, in sich geschlossenen Rahmen 4 verbunden. Auf der der Metallplatte 1 abgewandten Seite ist der Rahmen 4 mit einem Metallblech 5 verbunden. Die Verbindung mit dem Rahmen 4 kann als Schraub- oder Nietverbindung ausgebildet sein, oder durch Kleben, Löten oder Schweißen hergestellt sein. Der Zwischenraum zwischen dem Metallblech 5 und der Metallplatte 1 ist mit einer Isolierung 6 ausgefüllt, die dem Wärme- oder Schallschutz dient. Im letzten Fall ist die Metallplatte 1 mit einer Perforation versehen.

Der Rahmen 4 weist ein hinterschnittenes Profil auf, in das seitlich Halteschienen 7 eingreifen. Die Halteschienen 7 sind an der Decke 8 des zu klimatisierenden Raumes über Halterungen 9 befestigt. Der Querschnitt der Halteschiene 7 ist dem Profil des Rahmens 4 angepaßt. Gemäß Fig. 1 sind die Halteschienen 7 rautenförmig, während das Profil des Rahmens 4 einen nach innen springenden rechten Winkel aufweist, an dessen Schenkel sich zwei Flansche anschließen, mit denen das Metallblech 5 und die Metallplatte 1 verbunden sind. Diese Nut-Feder-Verbindung zwischen Rahmen 4 und Halteschiene 7 kann auch dadurch gebildet werden, daß der Rahmen 4 ein nach außen gewölbtes Profil aufweist, das in eine Ausnehmung der Halteschiene 7 eingreift.

Auf der dem Raum zugewandten Seite kann die Metallplatte 1 des Wärmeaustauschelementes mit einem Putz aus Kunststoffharz oder mineralischen Stoffen beschichtet, mit einem Farbanstrich versehen, oder mit Textilmaterialien aus Naturprodukten oder Kunstfasern überspannt sein. Die aneinander gefügten flächenförmigen Wärmeaustauschelemente bilden damit die Raumdecke oder auch die Wand des zu klimatisierenden Raumes. Die Halteschienen 7 können nahe an der oder in einem Abstand von der Decke 8 angebracht sein. Im letzten Fall bilden die Wärmeaustauschelemente eine abgehängte Raumdecke.

Die Wärmeaustauschelemente können mit gleichartigen, als Blind- oder Abschlußelemente dienenden Elementen zu einer geschlossenen Decke verbunden sein. Diese gleichartigen Elemente bestehen wie die beschriebenen Wärmeaustauschelemente aus einer dem Raum zugewandten Metallplatte, einem Rahmen, einem Metallblech und einer dazwischen liegenden Isolierung. Der einzige Unterschied besteht darin, daß die Metallplatte keine Strömungskanäle aufweist. In die Metallplatte der gleichartigen Elemente sind die Deckenelemente, wie Lampen, Lautsprecher, Feuermelder oder Sprinklerelemente eingesetzt.

## Patentansprüche

1. System zum Klimatisieren, insbesondere zum Kühlen von Räumen mit einem flächenförmiges Wärmeaustauschelement bestehend aus Strömungskanälen (2) zur Führung eines Wärmeaustauschmediums und aus einer Metallplatte (1), die zur Bildung eines selbsttragenden Bauteils verstärkt ist, dadurch gekennzeichnet, daß die Strömungskanäle (2) in die Metallplatte (1) integriert sind, daß die Metallplatte (1) auf der dem Raum abgewandten Seite mit einem umlaufenden, profilierten Rahmen (4) verbunden ist, daß an der Decke (8) des Raumes Halteschienen (7) befestigt sind und daß der Rahmen (4) und die Halteschienen (7) ineinandergreifen, wobei der Rahmen (4) oder die Halteschienen (7) ein hinterschnittenes Profil aufweisen.

2. System nach Anspruch 1, dadurch gekennzeichnet, daß die Metallplatte (1) auf der dem Raum abgewandten Seite mit einer Isolierung (6) versehen ist.

3. System nach Anspruch 2, dadurch gekennzeichnet, daß die Isolierung aus Hartschaum besteht.

4. System nach Anspruch 1, dadurch gekennzeichnet, daß der umlaufende Rahmen (4) mit einem Metallblech (5) verbunden ist.

5. System nach Anspruch 4, dadurch gekennzeichnet, daß die Isolierung (6) zwischen dem Metallblech (5) und der Metallplatte (1) angeordnet ist.

6. System nach einem der Ansprüche 1 bis 5, dadurch gekennzeichnet, daß das Wärmeaustauschelement raumseitig mit einem Putz aus Kunstharz oder mineralischen Stoffen beschichtet ist.

7. System nach einem der Ansprüche 1 bis 6, dadurch gekennzeichnet, daß das Wärmeaustauschelement raumseitig mit einem Farbanstrich versehen ist.

8. System nach einem der Ansprüche 1 bis 6, dadurch gekennzeichnet, daß das Wärmeaustauschelement raumseitig mit Textilmaterialien aus Naturprodukten oder Kunstfasern überspannt ist.

9. System nach einem der Ansprüche 1 bis 8, dadurch gekennzeichnet, daß das Wärmeaustauschelement Bestandteil einer abgehängten Raumdecke ist.

## Claims

1. System for air-conditioning, in particular for the cooling of rooms, with an areally shaped heat-exchanging element consisting of flow channels (2) for the conduction of a heat-exchanging medium and of a metal plate (1), which is re-inforced for the formation of a self-supporting component, characterised thereby, that the flow channels (2) are integrated into the metal plate (1), that the metal plate (1) is connected on the side remote from the room with an encircling profiled frame (4), that retaining rails (7) are fastened at the ceiling (8) of the room and that the frame (4) and the retaining rails (7) interengage, wherein the frame (4) or the retaining rails (7) display an undercut profile.

2. System according to claim 1, characterised thereby, that the metal plate (1) is provided on the side remote from the room with an insulation (6).

3. System according to claim 2, characterised thereby, that the insulation consists of hard foam.

4. System according to claim 1, characterised thereby, that the encircling frame (4) is connected with a metal plate (5).

5. System according to claim 4, characterised thereby, that the insulation (6) is arranged between the metal plate (1) and the metal plate (5).

6. System according to one of the claims 1 to 5, characterised thereby, that the heat-exchanging element is coated at the side towards the room with a dressing of synthetic resin or mineral substances.

7. System according to one of the claims 1 to 6, characterised thereby, that the heat-exchanging element is provided at the side towards the room with a coat of paint.

8. System according to one of the claims 1 to 7, characterised thereby, that the heat-exchanging element is covered at the side towards the room by textile materials of natural products or synthetic fibres.

9. System according to one of the claims 1 to 8, characterised thereby, that the heat-exchanging element is a component of a suspended ceiling.

## Revendications

1. Système de climatisation, en particulier pour le refroidissement de locaux, avec un élément échangeur de chaleur planiforme, composé de canaux d'écoulement (2) destinés au guidage d'un fluide d'échange de chaleur et d'une plaque métallique (1), renforcée en vue de former un élément de construction autoporteur, caractérisé en ce que les canaux d'écoulement (2) sont intégrés dans la plaque métallique (1), en ce que, du côté opposé au local, la plaque métallique (1) est entourée par un cadre profilé (4), en ce qu'au plafond (8) du local sont disposées des glissières de fixation (7) et en ce que le cadre (4) et les glissières de fixation (7) s'engagent les uns dans les autres, le cadre (4) ou les glissières de fixation (7) présentant un profil doté d'une contre-dépouille.

2. Système selon la revendication 1, caractérisé en ce que la plaque métallique (1) est pourvue d'une isolation (6), du côté opposé au local.

3. Système selon la revendication 2, caractérisé en ce que l'isolation est réalisée en matériau alvéolaire dur.

4. Système selon la revendication 1, caractérisé en ce que le cadre de pourtour (4) est relié à une tôle métallique (5).

5. Système selon la revendication 4, caractérisé en ce que l'isolation est disposée entre la tôle métallique (5) et la plaque métallique (1).

6. Système selon l'une des revendications 1 à 5, caractérisé en ce que l'élément échangeur de chaleur est recouvert d'un enduit en résine synthétique ou en substances minérales.

7. Système selon l'une des revendications 1 à 6, caractérisé en ce que l'élément échangeur de chaleur est pourvu côté local d'une couche de peinture.

8. Système selon l'une des revendications 1 à 6, caractérisé en ce que l'élément échangeur de chaleur est revêtu côté local de matériaux textiles à base de produits naturels ou de fibres synthétiques.

9. Système selon l'une des revendications 1 à 8, caractérisé en ce que l'élément échangeur de chaleur fait partie d'un plafond suspendu.
